**Europäisches Patentamt**

(19) **European Patent Office**

**Office européen des brevets**

(11) Numéro de publication: **0 050 080**
**B1**

(12) **FASCICULE DE BREVET EUROPEEN**

(45) Date de publication du fascicule du brevet:
**20.03.85**

(51) Int. Cl.⁴: **B 65 G  37/02,** B 23 Q  7/14

(21) Numéro de dépôt: **81401587.1**

(22) Date de dépôt: **13.10.81**

(54) Installation pour l'assemblage et/ou l'usinage de pièces portées par des palettes circulantes et immobilisables.

(30) Priorité: **14.10.80  FR 8021976**
**08.04.81  FR 8107088**
**11.09.81  FR 8117272**
**09.10.81  FR 8119109**

(43) Date de publication de la demande:
**21.04.82 Bulletin 82/16**

(45) Mention de la délivrance du brevet:
**20.03.85 Bulletin 85/12**

(84) Etats contractants désignés:
**AT BE CH DE GB IT LI LU NL SE**

(56) Documents cités:
**DE - A - 1 814 452**
**DE - A - 2 644 136**
**DE - A - 2 752 268**
**FR - A - 2 306 145**
**GB - A - 2 040 244**

(73) Titulaire: **Prodel, Maurice, 153, rue de Verdun Carlepont,
F-60170 Ribecourt (FR)**
Titulaire: **Prodel, Jacques, 120 rue de Cuts Carlepont,
F-60170 Ribecourt (FR)**

(72) Inventeur: **Prodel, Maurice, 153, rue de Verdun
Carlepont, F-60170 Ribecourt (FR)**
Inventeur: **Prodel, Jacques, 120 rue de Cuts Carlepont,
F-60170 Ribecourt (FR)**

(74) Mandataire: **Netter, André et al, Cabinet NETTER 40, rue
Vignon, F-75009 Paris (FR)**

ACTORUM AG

## Description

On a déjà proposé (DE-OS No 2 644 136) une installation dans laquelle un support de pièce entraîné par frottement d'un de ses bords par une bande rectiligne en circulation continue est, au droit d'un poste de travail faisant partie d'une multiplicité de postes de travail alignés suivant une parallèle à ladite bande, commandé pour se déplacer transversalement par rapport à ladite bande pour alimenter un poste de travail et, après circulation dans ledit poste parallèlement à ladite bande, ramené à celle-ci pour participer à nouveau au mouvement de ladite bande en circulation continue.

Dans cette installation, le passage du déplacement dudit support de pièce dans une direction à un déplacement dans une direction perpendiculaire fait intervenir une multiplicité de vérins rendant ainsi la construction de l'installation compliquée et coûteuse, le fonctionnement desdits vérins ralentissant en outre le mouvement d'ensemble des supports de pièces et limitant le rythme de travail de l'installation.

On a également proposé (DE-OS No 2 752 268) un chariot porte-pièce présentant latéralement deux ailes dont l'une et/ou l'autre peuvent servir à l'entraînement du chariot en coopération avec à chaque fois une bande de circulation.

La présente invention a pour objet une installation pour l'assemblage et/ou l'usinage manuel et/ou automatique de pièces portées par des palettes généralement rectangulaires comprenant, pour l'entraînement des palettes, des brins en mouvement de courroies ou analogue coopérant par friction avec au moins une marge des palettes, caractérisée en ce que les brins de courroie ou analogue sont disposés les uns à la suite des autres et/ou parallèlement et/ou perpendiculairement entre eux de sorte que leurs actions successives ou simultanées d'entraînement à friction sur un côté ou deux côtés parallèles ou perpendiculaires des palettes entraînent chaque palette suivant un trajet plan à voies parallèles et perpendiculaires, le passage de l'entraînement d'une palette, d'abord dans une première voie puis dans une voie perpendiculaire par des brins de courroie ou analogue perpendiculaires entre eux, se faisant grâce à des moyens de butée pour limiter la course de la palette dans la première voie, rendant le premier brin inopératoire.

Une telle installation est d'une constitution extrêmement simple et de construction économique. Elle est d'un fonctionnement sûr, précisément en raison de sa simplicité.

Elle assure une circulation rapide des pièces portées par les supports de pièce ou palettes.

Elle peut être réalisée suivant une multiplicité de formes.

Les postes de travail qu'elle comporte peuvent être des postes d'assemblage ou des postes d'usinage.

L'invention vise notamment une réalisation caractérisée en ce que pendant une phase où s'exercent simultanément les actions d'entraînement à friction des deux brins perpendiculaires, un guidage neutralise l'action du second brin jusqu'à ce que la palette parvienne dans la position de changement de direction.

On assure ainsi la parfaite perpendicularité des trajectoires successives du support de pièce ou palette.

La description qui suit, faite à titre d'exemple, se réfère aux dessins annexés, dans lesquels:

La figure 1 est une vue en plan de l'installation;
la figure 2 est une vue en plan d'une palette par sa face supérieur;
la figure 3 est une vue en plan d'une palette par sa face inférieure;
la figure 4 est une vue d'une palette, en élévation;
la figure 5 est une vue en coupe verticale d'une partie d'une palette et de moyens pour le codage;
la figure 6 est une vue en coupe verticale d'une partie de palette, avec un détecteur de proximité coopérant;
la figure 7 est une vue en coupe verticale transversale au droit d'un module de retour rapide des palettes;
la figure 8 est une vue en coupe horizontale d'une partie d'un module de retour angulaire;
la figure 9 est une vue en coupe suivant la ligne IX-IX de la figure 8;
la figure 10 est une vue en coupe suivant la ligne X-X de la figure 8;
la figure 11 est une vue en coupe suivant la ligne XI-XI de la figure 8;
la figure 12 est une vue en coupe horizontale d'un module d'assemblage manuel;
la figure 13 est une vue en coupe suivant la ligne XIII-XIII de la figure 12;
la figure 14 est une vue en coupe suivant la ligne XIV-XIV de la figure 12;
la figure 15 est une vue schématique en plan d'un module d'assemblage et/ou d'usinage automatique;
la figure 16 est une vue schématique en plan d'un module d'assemblage manuel;
la figure 17 est une vue en coupe horizontale d'une partie d'une machine-transfert au voisinage d'un carrefour de voies perpendiculaires;
la figure 18 est une vue en coupe selon la ligne XVIII-XVIII de la figure 17;
la figure 19 est une vue analogue à la figure 18, pour une autre condition;
la figure 20 est une vue en coupe suivant la ligne XX-XX de la figure 18;
la figure 21 est une vue en coupe suivant la ligne XXI-XXI de la figure 19.

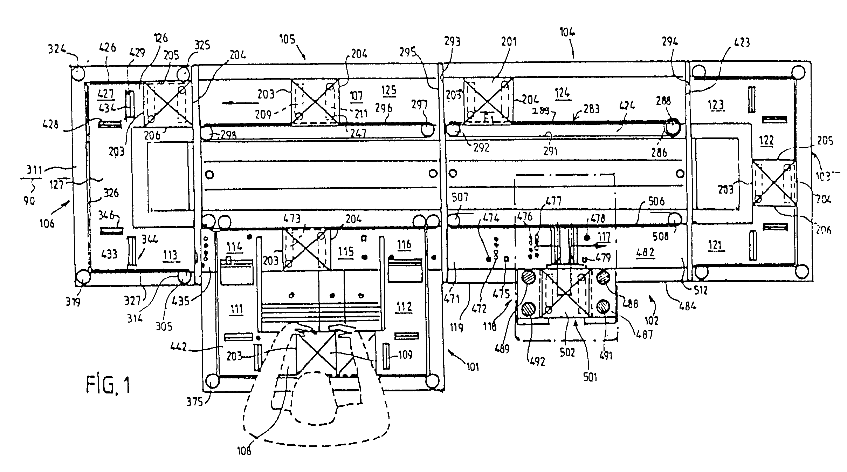

L'installation selon l'invention, ou atelier flexible, comprend, dans la forme de réalisation montrée sur la figure 1, six ensembles ou modules, à savoir un module 101 d'assemblage manuel, un module 102 d'assemblage ou d'usinage automatique, un premier module de retour angulaire 103, un premier module de retour rectiligne rapide 104, un second module de retour rectiligne rapide 105 et un second module de retour angulaire 106.

Le module 101 ménage, pour des palettes porte-pièce (décrites en détail ci-après), une voie antérieure 108 dans laquelle la ou les pièces portée(s) par une palette, comme montré en 109, peut(vent) être assemblée(s) ou autrement traitée(s) manuellement (l'opérateur, ou l'opératrice, est montré en trait pointillé). La voie 108 est alimentée en palettes à partir d'une voie 111, qui lui est perpendiculaire, que ménage le module 101 et les palettes, telles que 109, se trouvant sur la voie 108 peuvent être évacuées par une voie 112 dudit module, perpendiculaire à la voie 108.

Une palette parvient à la voie 111 du module 101 à partir d'une voie 113, perpendiculaire à la voie 111, que ménage le module 106. L'extrémité amont de la voie 111 constitue un carrefour 114 qui est dans le prolongement de la voie 113.

Le module 101 ménage également une voie postérieure 115 dans l'alignement de la voie 113 et dont l'extrémité aval forme, avec l'extrémité aval de la voie 112, un carrefour 116.

Le module 102, adjacent au module 101, ménage une voie 117 dans l'alignement des voies 113 et 115, qui règne sur toute la longueur du module 102, et à mi-longueur de ladite voie ledit module présente un poste d'assemblage ou d'usinage automatique, 118, en saillie vers l'avant par rapport à la face frontale 119 dudit module.

Le module 103 présente une voie 121, prolongeant la voie 117 et en alignement avec celle-ci, et qui se poursuit par une voie perpendiculaire 122, celle-ci se poursuivant par une voie 123 perpendiculaire à la voie 122 et ainsi parallèle à la voie 121.

Le premier module de retour rapide 104 présente une voie 124 prolongeant la voie 123 et en alignement avec celle-ci, et ainsi parallèle aux voies 113, 115 et 117.

Le second module de retour rapide 105 ménage une voie 125 prolongeant la voie 124 et en alignement avec celle-ci, et la voie 125 se prolonge par une voie 126, en alignement avec elle, du second module de retour angulaire 106, lequel présente également une voie 127 perpendiculaire à la voie 126, la voie 127 se poursuivant par la voie 113 qui lui est perpendiculaire.

Les modules sont prévus pour réaliser la circulation de palettes ou porte-pièces, pour assurer leur immobilisation en des positions prédéterminées, en vue de permettre le traitement, manuel ou automatique, des pièces qu'elles portent. La circulation des palettes est contrôlée de manière manuelle ou automatique en fonction du traitement à appliquer aux pièces, de l'alimentation en pièces, de l'évacuation des pièces, suivant des modalités présélectionnables et dans des conditions de sécurité optimales tant à l'égard du personnel que des pièces.

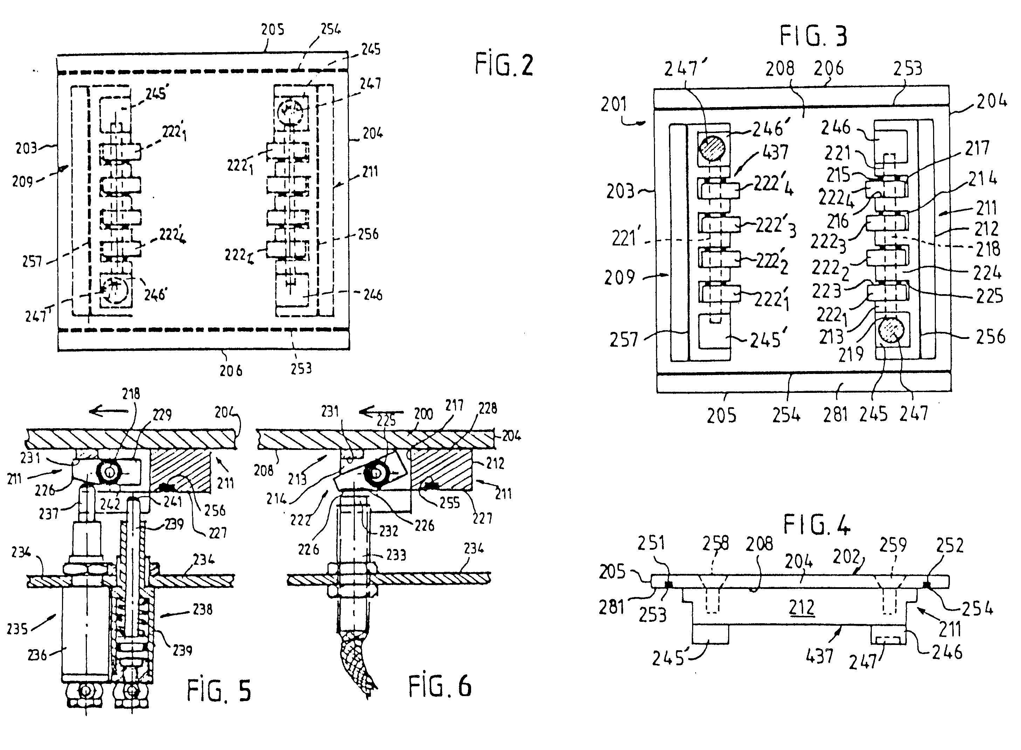

Une palette porte-pièce 201 (figures 2 à 6) comporte un corps de palette 202 constitué par un plateau métallique, de configuration rectangulaire, à faces latérales 203, 204 et 205, 206, face supérieure 207 et face inférieure 208. En raison du fait que, comme vu plus loin, l'orientation des palettes reste identique, la face 203 peut être appelée la face gauche, la face 204 la face droite, la face 205 la face arrière et la face 206 la face avant, comme vues par-dessus.

Sur la face inférieure 208 sont fixés deux patins à configuration générale parallélépipédique 209 et 211, à proximité respectivement des faces avant et arrière 203 et 204. Chaque patin, par exemple le patin 211, présente une face externe 212 (figure 3) plane. Sa face interne opposée 213 est crénelée, chaque créneau 214, à configuration rectangulaire, étant limité par deux faces parallèles 215, 216 et un fond 217. Dans la forme de réalisation décrite, ces créneaux sont au nombre de quatre pour chaque patin. Ils sont traversés par un axe ou tige 218 fixé à ses extrémités dans les extrémités 219 et 221 du patin et sur lequel sont montées à rotation, logées dans chacun des créneaux, des touches en matériau ferreux 222 (figures 5 et 6), ainsi au nombre de quatre, $222_1$, $222_2$, $222_3$, $222_4$ pour le patin 211; $222'_1$, $222'_2$, $222'_3$, $222'_4$ pour le patin 209. Entre une face plane 223 d'une touche et la face en regard 215 d'une patte adjacente 224 délimitant le créneau, est interposé un joint, par exemple torique, 225, en caoutchouc ou analogue, d'épaisseur initialement plus grande que l'intervalle séparant la joue 223 de la face 215, ledit joint introduisant ainsi un frottement dans la rotation de la touche 222.

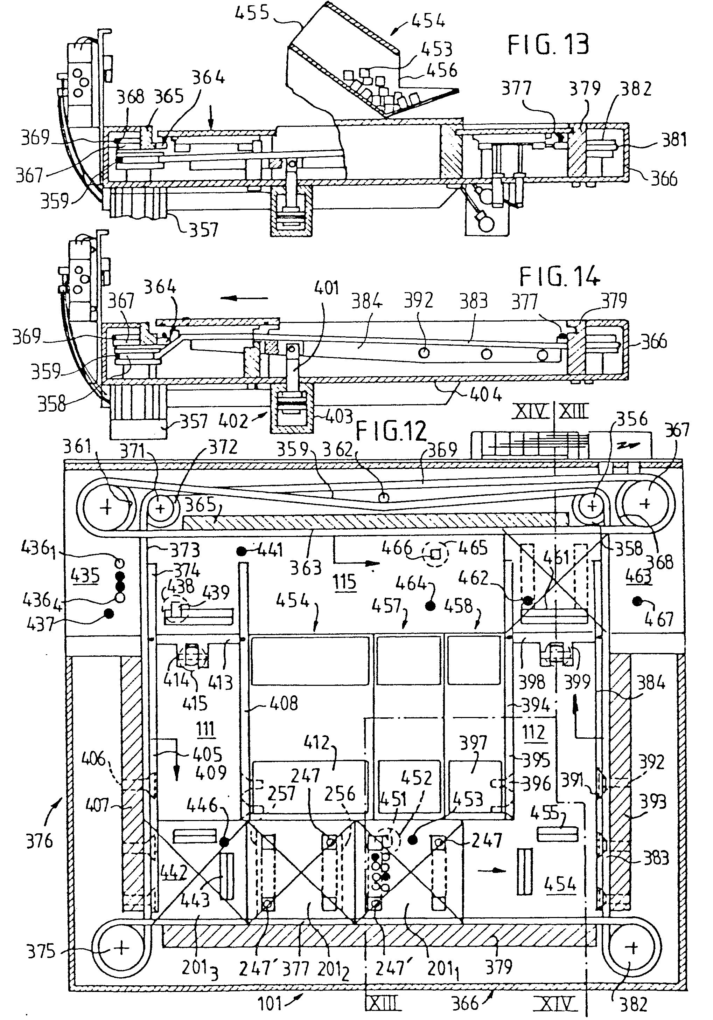

Une telle touche a une configuration générale parallélépipédique mais présente une face en biseau 226 de sorte que, dans une position inopératoire, comme montrée sur la figure 5, ladite face 226 reste en-deça du plan prolongeant la face 227 du patin 211 opposée à la face 228 par laquelle il est solidarisé avec la face 208 du plateau 202 constitutif du corps de la palette; la touche prend alors appui par sa face 229, opposée à la face 226, contre une face 231 du patin 211 (figure 5). Dans l'autre condition, opératoire, montrée sur la figure 13, ladite face 226 de ladite touche est dans ledit plan 227 et propre à coopérer avec un détecteur de proximité 232 que présente une tige 233 fixée sur un fond ou plancher 234 d'un module lorsque la face 226 vient à l'aplomb de la tige 233.

Sur la figure 5, on a en outre montré un petit vérin pneumatique 235, fixé sur le plancher 234 dont le corps 236 est en dessous du plancher et l'organe mobile 237 au-dessus dudit plancher et qui, dans la position sortie, amène la touche 222 dans la position où sa face 229 est en contact avec la face 231, c'est-à-dire dans la condition inopératoire.

On a également représenté sur cette figure, fixé sur le plancher 243, un second vérin 238, dont le corps 239 est en dessous du plancher 234 et l'organe mobile 239 au-dessus dudit plancher et qui est propre, par son extrémité 241, à amener une touche 222 (situé en avant de la touche montrée sur la figure 5), dans une position pour laquelle sa face 226 est coplanaire avec la face 227 du patin 211, et cela par coopération avec la face 242 de ladite touche.

A leurs extrémités, les patins 209 et 211 se prolongent vers le bas par des plots de forme parallélépipédique, 245, 246, pour le patin 211 et 245', 246', pour le patin 209. Sur les faces inférieures desdits patins, on peut coller, ou autrement fixer, des pastilles minces métalliques, comme montré en 247, 247', notamment suivant une disposition diagonale.

Toute la partie centrale de la face inférieure du plateau 202 est libre, c'est-à-dire dépourvue de tout obstacle ou aspérité. La face supérieure 207 du plateau est également libre.

Près de ses bords 205 et 206, le plateau ou plaque 202 présente sur sa face inférieure 208 deux étroites saignées rectilignes 251 et 252 (figure 4) logeant deux filets 253, 254 en matériau à coefficient de frottement plus élevé que celui constitutif du plateau 202, par exemple du type caoutchoutique, comme en néoprène ou analogue, dont la face inférieure est coplanaire avec la face inférieure 208.

La face inférieure 227 de chaque patin présente une étroite rainure 255 (figures 5 et 6) pour le logement de filets 256 et 257 de néoprène ou analogue, affleurant lesdites faces inférieures 227 et perpendiculaires aux filets 253, 254.

En variante, ce sont des stries du métal ou un moletage qui confèrent localement au plateau ou aux patins un coefficient de frottement plus élevé.

Dans certains cas, un tel moletage est même inutile.

La fixation des patins 209, 211 à la plaque 202 se fait par des vis, comme montré en 258, 259 (figure 4).

Chacun des modules comprend des moyens pour le guidage des palettes, leur mise en circulation à l'aide d'un seul moteur électrique, des moyens pour l'accueil des palettes à partir d'un module précédent et des moyens pour le transfert des palettes au module suivant.

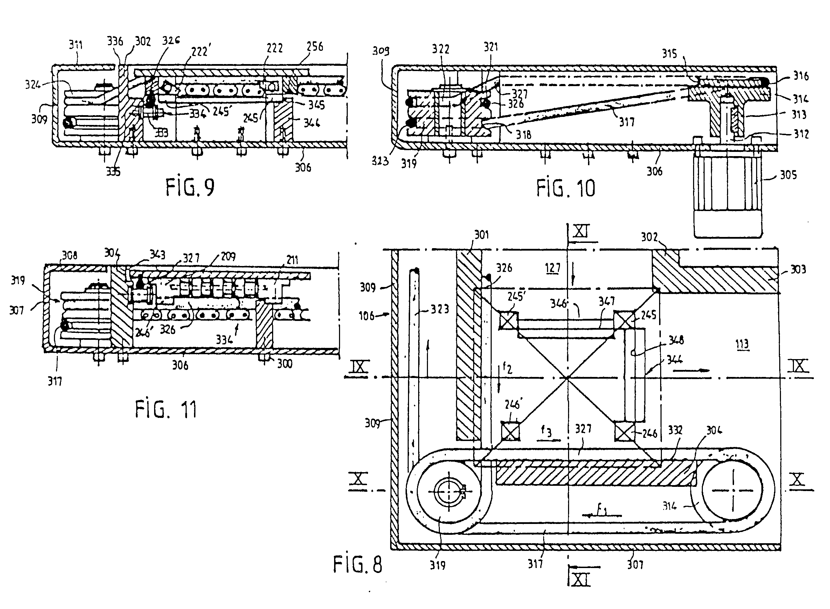

Le module 104, ou premier module de retour rapide, présente (figure 7) un corps de module 141 avec un plancher 142, un rebord postérieur ou externe 143 et un rebord interne 144, le rebord 143 présentant une paroi verticale 145 et un retour 146, tandis que le rebord 144 présente une paroi verticale 147 et un retour horizontal 148.

Sur le fond ou plancher 142 du module 104 sont fixés, par des vis 151 et 152, des rails, respectivement 153 et 154, dont le premier, postérieur ou arrière, est destiné à guider les palettes comme montrées en 155. Le rail 153 présente à cet effet un épaulement 156; le rail 154 présente aussi un épaulement 157 à un niveau légèrement inférieur à celui de l'épaulement 156. Des vis 158, 159 contribuent à la fixation du fer en U 149 au plancher 142 du module 104. Le rail 154 présente une encoche 161 pour la fixation d'une chaîne Galle 162 dont chaque maillon présente deux rouleaux 163 encadrés par des joues 164 et 165.

Par sa partie marginale 281, la palette 155 repose sur l'épaulement 156 et est en contact par sa face arrière 205 avec la face 282 du rail 153. Sur sa marge opposée, avant, la palette 155 repose par le filet 253 contre une courroie 283 à section transversale circulaire reposant elle-même sur les rouleaux 163 de la chaîne Galle 162. La courroie 283 est entraînée à partir d'un moteur électrique 286 (figure 1) qui équipe le module 104 et qui, par son arbre, entraîne une poulie 288 sur laquelle passe la courroie 283 qui forme ainsi deux brins, à savoir un brin opératoire 289 adjacent au rail 154 et un brin de retour 291 qui n'a pas besoin de coopérer avec une chaîne Galle, ladite courroie passant sur une poulie 292 à l'extrémité 293 du module 104 opposée à l'extrémité 294 portant le moteur électrique 286. La résistance au déplacement de la courroie est relativement très faible en raison de sa coopération avec les rouleaux 163.

Le module 105 (figure 1), ou second module de retour rapide, est constitué de façon identique au module 104. Le transfert d'une palette du module 104 au module 105 se fait sans aucune difficulté, la palette sortant du module 104 étant entraînée à son entrée dans le module 105, à l'extrémité 295 de celui-ci, grâce à une courroie 296 qui équipe ce dernier, entraînée à partir d'un moteur électrique qui équipe celui-ci, et guidée par deux poulies 297, 298.

A la sortie de la voie 125 du module 105, la palette pénètre dans la voie 126 du module 106 qui prolonge la voie 125. Ce dernier comporte des moyens pour entraîner la palette suivant un mouvement perpendiculaire dans la voie 127, puis dans la voie 113, dans un mouvement perpendiculaire à celui qu'elle a dans la voie 127.

Sur les figures 8 à 11, on a montré la partie du module 106 au raccordement des voies 127 et 113. La voie 127 est limitée par deux rails transversaux 301 et 302 (figure 8) et la voie 113 par deux rails longitudinaux 303 et 304. Un moteur électrique 305 (figure 10) fait partie du module 106; il est placé sous la paroi inférieure ou plancher 306 dudit module, à la sortie de la voie 113. Ledit module est en outre limité par une paroi antérieure 307 se prolongeant par un rebord horizontal 308, (fig. 11) une paroi latérale verticale 309 se prolongeant par un rebord horizontal 311 (fig. 9).

Sur l'arbre 312 du moteur électrique 305 est calée, par son noyau 313, une poulie 314. Cette poulie présente une gorge 315 à sa partie supérieure et dans cette gorge passe une courroie 316, à section transversale circulaire. Le brin 317 qui quitte la poulie 314 circule dans le sens de la flèche $f_1$ (figure 8) et parvient à la gorge inférieure 318 d'une poulie 319 à deux gorges. (fig. 10). La gorge 318 est à un niveau inférieur à celui de la gorge 315 de la poulie motrice 314. La gorge 318, proche du fond ou plancher 306, détermine ainsi un niveau inférieur; la seconde gorge, 321, de ladite poulie définit un niveau intermédiaire et la gorge 315 définit un niveau supérieur. La poulie 319 est montée à rotation libre autour d'un axe 322.

Le brin 317, après être passé sur la poulie 319 dans la gorge inférieure 318, se poursuit par un brin 323 adjacent à la paroi verticale 309 et qui est au niveau inférieur. Après être passée sur la gorge inférieure d'une poulie 324 (figure 1), prévue au raccordement entre la voie 126 et la voie 127, puis sur une poulie 325 prévue à l'entrée de la voie 126, après avoir été guidée à nouveau sur la poulie 324, mais sur une gorge de celle-ci située à un niveau intermédiaire, la courroie revient suivant un brin 326 qui, après engagement dans la gorge 321 (fig. 10), de niveau intermédiaire de la poulie 319 se poursuit par un brin 327 d'abord ascendant puis horizontal, lequel passe dans la gorge 315 de la poulie 314 de niveau supérieur pour se raccorder au brin 317.

On dispose donc, sur la voie 127, d'un brin horizontal 326 de courroie, adjacent au rail 301 et circulant dans le sens de la flèche $f_2$, à un niveau intermédiaire et on dispose dans la voie 113, adjacent à la face interne 332 (fig. 8) du rail 304, d'un brin 327 circulant dans le sens de la flèche $f_3$, à un niveau supérieur. Le brin 327 repose sur les rouleaux d'une chaîne Galle logée dans un embrèvement dudit rail 304.

Dans la voie 127, une palette repose par son patin 209 sur le brin 326 de la courroie, par l'intermédiaire de son filet 257, ce qui réalise son entraînement. Le brin 326 repose à son tour sur les rouleaux 333 (fig. 9) d'une chaîne Galle 334 logée dans l'encoche 335 du rail 301.

La palette est donc entraînée par le brin 326 et son mouvement se poursuit jusqu'à ce que le filet avant 253 de la palette, situé à un niveau supérieur à celui du filet 257, vienne recontrer le brin 327 de la courroie qui circule dans un sens perpendiculaire au déplacement de la palette et coopère avec ledit brin pour assurer l'entraînement de la palette dans une direction perpendiculaire à celle de son déplacement antérieur, le mouvement de la palette dans la direction dudit déplacement antérieur étant, s'il y a lieu, limité par butée de sa face frontale 206 contre le gradin 343 du rail 304.

Dans la dernière partie de son déplacement dans la voie 127, la palette est soutenue par coopération de la face inférieure de son plot 246 avec un petit bloc rectangulaire 344 fixé sur le fond ou plancher 306 et qui présente sur sa face supérieure une encoche 345 (fig. 9). A la fin du mouvement, le plot 246 échappe au petit bloc 344 (figure 8) et le plot 245 n'est pas en position de coopération avec le bloc 344, de sorte que ce petit bloc 344 ne constitue pas un obstacle pour le déplacement de la palette dans la direction perpendiculaire. Lors de ce dernier déplacement, c'est le plot 245' qui coopère avec un second petit bloc 346, de direction générale perpendiculaire à celle du premier petit bloc 344, ce qui contribue au soutien de la palette.

Pendant ce dernier mouvement, c'est la face verticale 347 du petit bloc 346 qui assure un guidage de la palette entraînée par le brin 327 de la courroie, tandis que dans le déplacement antérieur, perpendiculaire, c'est la face verticale 348 du petit bloc 344 qui assurait le guidage de la palette entraînée par le brin 326 (fig. 8).

Peu après, lors de la circulation de la palette dans la voie 113, le soutien de celle-ci se fait par les rails 303 et 304, à embrèvements.

La palette s'est déplacée dans un même plan horizontal, dans la voie 127, au carrefour 433, et également dans la voie 113 perpendiculaire à la voie 127.

La fixation des petits blocs 344, 346, au plancher 306, se fait par l'intermédiaire de vis 300, en analogie avec la fixation des rails.

Au sortir du module 106, la palette parvient au module 101 dont les moyens d'entraînement des palettes vont maintenant être définis. Sur l'arbre 356 (figures 12 à 14) d'un moteur électrique 357 est calée une poulie 258 qui est au niveau bas et sur laquelle passe le brin ascendant 359 d'une courroie qui parvient à une poulie 361 dont la gorge est au niveau haut, le brin 359 ayant, en projection horizontale, une configuration en V, à branches très ouvertes, par l'intervention d'un galet 362. Après passage sur la poulie 361, la courroie se poursuit par un brin 363, au niveau haut, qui repose sur les rouleaux d'une chaîne Galle 364 logée dans l'encoche d'un rail 365 qui borde la voie 115 sur toute sa longueur sur son côté éloigné de la face frontale antérieure 366 du module 101. La courroie passe ensuite dans la gorge 368 d'une poulie 367 disposée dans le module 101 à l'extrémité opposée à celle où se trouve la poulie 361, au même niveau que la gorge de la poulie 361, c'est-à-dire au niveau haut. A partir de la poulie 367, la courroie se poursuit suivant un brin descendant 369, jusqu'à une poulie 371, voisine de la poulie 361, mais dont la gorge 372 est au niveau bas, le galet 362 évitant le contact avec le brin 359 dans la partie médiane des brins 359 et 369.

Après passage sur la poulie 371, la courroie se poursuit par un brin transversal 373 repose sur un bras 374 et elle parvient sur la gorge d'une poulie 375 située à un niveau intermédiaire, à l'angle du bord antérieur 366 du module 101 et de son bord latéral de gauche 376. A partir de la poulie 375, la courroie gagne, suivant un brin 377, le niveau supérieur en s'appuyant sur le rouleau d'extrémité de la chaîne Galle logée dans l'encoche d'un rail 379 adjacent à la paroi verticale antérieure 366 du module 101. Le brin 377 passe ensuite sur la gorge 381, au niveau intermédiaire, d'une poulie 382 d'où il se poursuit à 90° par un brin 383 reposant sur un bras 384 à partir duquel la courroie fait retour au niveau inférieur sur la poulie 358 calée sur l'arbre 356 du moteur électrique 357.

Le bras 384 est une lame souple qui est fixée à son extrémité antérieure 391, par des vis 392, sur un bloc 393. Un autre bras 394, constitué par une lame souple, est distant du bras 384 d'un intervalle égal à la largeur d'une palette. Il est fixé, par son extrémité antérieure 395, par des vis 396 à un bloc ou rail 397 servant au guidage des palettes dans la voie 108. Entre les bras 384 et 394 est interposé un palonnier 398 et sur la fourche centrale 399 que présente ce palonnier vient agir l'organe mobile 401 d'un vérin 402 dont le corps 403 est fixé sur le fond 404 ou plancher du module 101.

La disposition équipant la voie 111 dudit module est analogue à celle qu'on vient de décrire et qui équipe la voie 112. Elle comprend, en dehors de la lame souple 374 fixée à son extrémité avant 405 par des vis 406 à un bloc 407, éloignée de ladite lame d'une distance égale à la largeur d'une palette, une seconde lame parallèle 408, fixée à son extrémité antérieure 409 par des vis 411 à un bloc 412. Entre les lames 374 et 408 est interposé un palonnier 413 sur lequel peut agir l'organe mobile 414 d'un vérin 415.

Le module 101 d'assemblage manuel est suivi par le module 102 d'assemblage et/ou d'usinage automatique, qu'on va maintenant décrire.

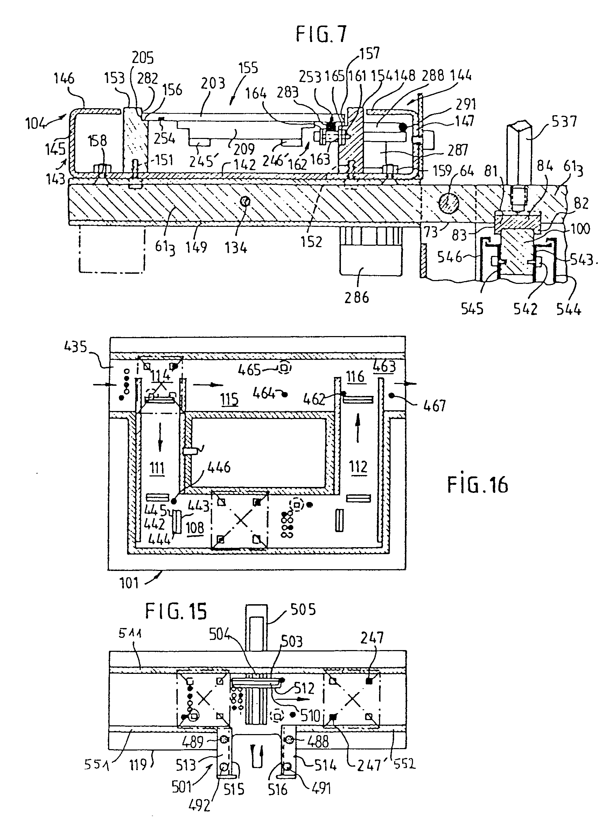

Le module 102 (figure 1) comprend un corps comprenant un plancher 482 avec un bord postérieur 483 et un bord antérieur 484. Du plancher 482 est solidaire une platine 487 qui sert au support de quatre colonnes 488, 489, 491, 492. Les colonnes traversent un guichet 501 dans lequel peut être engagée une palette porte-pièce comme montrée en 502, et cela sous l'action d'un poussoir 503, à alvéole 510, porté par l'organe mobile 504 d'un vérin 505, l'alvéole coopérant avec les plots 245, 245' de la palette. L'entraînement des palettes à l'intérieur du module 102 se fait par une courroie 506 passant sur des poulies 507, 508. Le maintien des palettes dans la voie 117 fait appel à un rail 511 et leur guidage à des rails 551, 552 (figure 15).

Le guichet 501 comprend des barres transversales 513 et 514 en saillie par rapport à la face frontale 119 et qui ménagent des rainures 515 et 516 pour le guidage et le soutien de la palette par ses marges adjacentes aux bords 202 et 204.

On va maintenant décrire la circulation d'une palette porte-pièce dans l'installation, tant à l'intérieur d'un module que pour le passage d'un module à un autre module voisin, en précisant les moyens prévus pour commander et contrôler automatiquement les divers circuits que peut suivre une palette, pour tenir compte notamment de l'encombrement plus ou moins grand d'un poste de travail.

Dans la voie 124 du premier module de retour rapide 104 (figure 1), une palette, comme montré en 201, circule dans le sens de la flèche $F_1$ ou direction longitudinale sous l'action d'entraînement de la courroie 283, entraînée par le moteur électrique 286, sur l'arbre duquel est calée la poulie 288 qui, en coopération avec la poulie 292, définit le circuit fermé de la courroie 283. Le moteur électrique 286 est placé à proximité de l'entrée 423 du module 104 sur le bord antérieur 144 de celui-ci.

A la sortie 293 de la voie 124, la palette pénètre dans la voie 125 du module 105 par l'entrée 295 de celle-ci, adjacente à la sortie 293, et elle est entraînée dans la voie 125 par la courroie 296 disposée en alignement avec la courroie 283. Le circuit fermé de la courroie 296 est imposé par les poulies 297 et 298. La poulie 297 est calée sur l'arbre d'un moteur électrique 425 disposé à proximité de l'entrée 295 de la voie 125.

Dans la voie 124, la palette est guidée par le rail 153 (figure 7) et dans la voie 125 elle est guidée par un rail qui prolonge le rail 153. L'entraînement de la palette se fait sans discontinuité, les vitesses des courroies 283 et 296, qui s'exercent simultanément sur la palette au passage de cette dernière de la voie 124 à la voie 125, étant indentiques.

Dans la voie 126 (figure 1) du module 106 prolongeant la voie 125, la palette est entraînée par le brin 426 de la courroie et, quand elle parvient au carrefour 427 entre la voie 126 et la voie 127, elle est soutenue par coopération de ses plots inférieurs 246, 246' avec un petit bloc 428 prolongeant le rail interne de la voie 126, pour la circulation dans le prolongement de ladite voie. Dans la voie 127, la palette est entrainée dans la direction transversale par le brin 326. Au début de sa circulation dans la voie 127, au soutien de la palette contribue un petit bloc 429, à faces verticales de guidage 434, et qui coopère avec les plots 246 et 247 de la palette. La palette parvient ensuite au carrefour 433 entre la voie 127 et la voie 113 où son changement de direction de sens de circulation s'effectue comme il a été expliqué en détail en référence aux figures 8 à 11.

A l'entrée 435 du module 101, qui prolonge la voie 113 du module 106 qui est immédiatement à l'amont du carrefour 114 entre la voie 111 et la voie 115, se trouvent une rangée de trous dans certains desquels on peut introduire des détecteurs de proximité du type montré sur la figure 6, lesdits trous ayant été référencés respectivement $436_1$, $436_2$, $436_3$, $436_4$ (figure 12), les trous garnis d'un détecteur ayant été montrés en poché sur la figure. Ces détecteurs sont propres à vérifier si les touches d'une rangée de la palette qui se présente sont dans une condition qui correspond à l'acheminement de ladite palette vers l'emplacement d'assemblage manuel du module 101 ou bien dans une condition qui correspond à la poursuite du mouvement de la palette dans la voie 115 dudit module prolongeant la voie 113.

Un détecteur 437 est propre à coopérer avec la pastille 247' que comporte le plot 246' de la palette pour provoquer la lecture par des détecteurs de proximité de la position des touches de la rangée amont de la palette (fig. 12). Si la palette ne doit pas être introduite dans le module 101, alors elle poursuit son mouvement dans la voie 115. Si, par contre, la palette doit être introduite dans le module 101, alors un vérin 438 prévu sur le fond du module 101, à l'entrée de la voie 111, est actionné, c'est-à-dire que son organe mobile 439 est sorti et vient constituier butée pour la palette par coopération avec le plot 246'. La position correcte de celle-ci est vérifiée par coopération d'un détecteur de proximité 441 avec la pastille 247 que comporte le plot 245.

Le vérin 415 est ensuite actionné, ce qui élève les lames 374 et 408, par flexion autour de leurs extrémités 407 et 409. Lesdites lames soulèvent alors la palette par coopération avec les zones marginales de sa face inférieure adjacentes aux patins et la palette est entraînée dans le couloir 111 par coopération du brin 373 de la courroie avec le filet 257 du patin 209. Le mouvement se poursuit jusqu'à l'arrivée de la palette au carrefour 442 (figure 16) entre la voie 111 et la voie 108, un petit bloc 443 contribuant au support et au guidage de la palette. Un détecteur 446 est prévu à l'entrée du carrefour et, par coopération avec la pastille 247 d'une palette présente au carrefour, informe le carrefour 114 que l'accès à la voie 108 du module 101 n'est pas libre, ce qui permet d'interdire automatiquement l'introduction d'une nouvelle palette dans la voie 111 et, au contraire, lui fait poursuivre son mouvement dans la voie 115.

Dans la condition montrée sur la figure 12, une palette $201_1$ est dans sa position opératoire, c'est-à-dire immédiatement en face de l'opérateur ou de l'opératrice. Elle est suivie, au contact avec elle, par une autre palette $201_2$, laquelle est suivie par une troisième palette $201_3$, précisément au carrefour 442.

La position opératoire de la palette $201_1$ est imposée par butée du plot 245' de ladite palette contre l'extrémité 451 alors en saillie, d'un vérin 452. C'est la coopération de la pastille 247 avec un détecteur 453 qui commande la sortie de l'organe mobile 451.

Dans cette position de la palette 201, l'opératrice effectue le traitement requis, par exemple en disposant des pièces 453 (figures 13) contenues dans un couloir incliné 454 à orifice d'entrée 455 et orifice de sortie 456. Dans la forme de réalisation, on a prévu trois tels couloirs, respectivement 454, 457 et 458 (fig. 12).

Dans la position de traitement de la pièce portée par la palette $201_1$, les touches de cette dernière sont immédiatement à l'aplomb des organes mobiles 237 et 239 des vérins 235 et 238 (figure 5), les premiers étant propres à effacer les touches 211, c'est-à-dire à les rendre inopératoires à l'égard des détecteurs de proximité, les seconds, au contraire, à les rendre opératoires en les amenant dans la position montrée sur la figure 6. On peut ainsi préparer la palette en vue du traitement de la pièce qu'elle porte dans le poste placé à l'aval.

Lorsque le traitement de la pièce portée par la palette $201_1$ est terminé, l'opératrice efface la butée que constitue l'organe mobile 451 du vérin 452 et la palette $201_1$ est entraînée par le brin 377 de courroie (fig. 12). Elle parvient au carrefour 454 entre la voie 108 et la voie 112, étant soutenue en fin de parcours par le petit bloc 455. Lorsque son bord 204 parvient sur le brin 383, c'est celui-ci qui devient moteur pour la palette, et celle-ci progresse dans la voie 112 en étant guidée par les lames 384 et 394, cette dernière s'opposant à un mouvement de la palette transversal à la voie 112. Lorsque la palette parvient au carrefour 116 entre la voie 112 et la voie 115, la coopération de sa pastille 247' avec un détecteur 462 actionne le vérin 399 qui, par l'intermédiaire du palonnier 398, laisse descendre des lames 384 et 394, de sorte que la palette supportée par ces lames a son filet 254 qui vient en contact avec le brin 363 de la courroie; l'entraînement de la palette se fait alors vers la sortie 463 du module 101. Dans la première phase du mouvement vers la sortie 463, la palette est soutenue et guidée par le petit bloc rectangulaire 461.

La voie 115, vers le bord postérieur de la palette 101, comporte un détecteur de proximité 464 qui, par coopération avec une pastille 247' de palette, révèle la présence d'une palette dans la voie 115 et permet de différer, s'il y a lieu, l'exécution de l'ordre d'avancement d'une palette à partir de sa position de traitement de pièce.

La voie 115 comprend également, dans son plancher, un vérin 465 dont l'organe mobile 466 constitue une butée s'opposant à l'avancement d'une palette et ainsi interdit la progression dans la voie 115 aussi longtemps que nécessaire pour éviter une collision avec une palette sortant de la voie 112.

Un détecteur de proximité 467 à la sortie 463 du module 101 permet de contrôler le défilement complet d'une palette dans ladite sortie.

Les palettes parvenant dans le module 102 sont ainsi des palettes dont les pièces qu'elles portent ont été traitées manuellement si elles ont suivi le circuit des voies 111, 108, 112, ou bien non traitées manuellement si elles ont suivi la voie 115.

Le module 102 présente à son entrée 471 (figure 1) une rangée 472 de trous à détecteurs de proximité propres à coopérer avec la rangée des touches d'une palette; un détecteur de proximité 474 est propre à coopérer avec une pastille 247' d'une palette; l'organe mobile d'un vérin 475 est prévu pour l'arrêt d'une palette à l'amont du poste automatique 117.

Le module 102 comprend également deux rangées de vérins 476, 477, pour l'actionnement des touches d'une palette. Un détecteur de proximité 478 est propre à coopérer avec une pastille 247 de palette et l'organe mobile 479 d'un vérin permet l'immobilisation d'une palette en regard du poste de traitement.

A la sortie 512 du module 102, une palette pénètre dans le module 103 par la voie 121 et la circulation dans ledit module se fait par des moyens analogues à ceux qui ont été décrits pour le module 106.

A la sortie du module 103, par la voie 123, les palettes pénètrent dans la voie 124 du premier module de retour rapide 104.

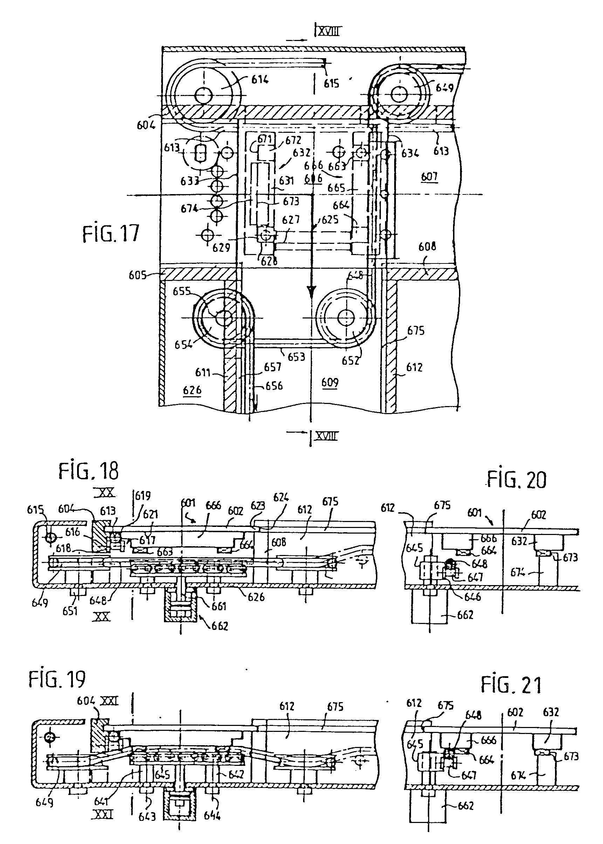

On se réfère maintenant aux figures 17 à 21.

Des supports de pièces ou palettes 601 à plateau 602 de forme rectangulaire parviennent par une voie 603, limitée par un rail postérieur 604 et un rail antérieur 605, à un carrefour 606 d'où prennent naissance une première voie 607 prolongeant la voie 603 et limitée d'une part par le rail postérieur 604 et d'autre part par un rail antérieur 608, et une seconde voie 609 limitée par un rail de gauche 611 et un rail de droite 612 perpendiculaires aux rails 604, 605, 608.

Lorsqu'elle accède au carrefour 606, la palette 601 est entraînée par un brin 613 d'une courroie à section circulaire, par exemple en polyuréthane, sous tension mécanique, entraînée par un moteur électrique non représenté, et provenant d'une poulie 614 où parvient le brin 615 de la courroie.

La courroie 613 est soutenue et guidée par les rouleaux 616 d'une chaîne Galle 617, fixe, logée dans un embrèvement 618 du rail 604 (fig. 18).

Pour l'entraînement de la palette 601, la courroie 613 coopère avec une zone marginale postérieure 619 de la surface inférieure 621 du plateau 602.

Lorsque la palette 601 doit poursuivre son mouvement dans le prolongement de la voie 603, c'est-à-dire dans la voie 607, son entraînement par la courroie 613 lui fait accéder à ladite voie 607 et c'est le brin 613 qui la fait progresser dans ladite voie, son guidage étant assuré par coopération de sa marge antérieure 623 avec une rainure 624 que présente le rail 608.

Pendant son défilement au-dessus du carrefour 606, le guidage est assuré par un bloc 625 fixé sur le fond ou plancher 626 et qui présente une face verticale 627 avec laquelle coopère la face verticale 628 d'un plot 629 faisant saillie par rapport à la face inférieure 631 d'un patin à configuration rectangulaire 632 dont la direction générale est parallèle aux bords de gauche et de droite respectivement 633 et 634 du plateau 602.

A l'entrée de la voie 607, sur le plancher 626, sont érigées deux colonnettes 641 et 642 dont le plan des axes 643 et 644 est transversal, c'est-à-dire perpendiculaire aux voies 603 et 607 et le long desdites colonnettes est monté à coulissement un barreau horizontal 645 (fig. 19). Ledit barreau, de forme générale parallélépipédique, porte, sur sa face 646, un tronçon de chaîne Galle à rouleaux 647 et sur lesdits rouleaux passe le brin 648 d'une courroie à section circulaire, qui peut être ou non celle comprenant les brins 613 et 615, et en provenance d'une poulie 649 montée à rotation libre par son axe 651 sur le plancher 626. Le brin 648 se poursuit jusqu'à une poulie 652 d'où la courroie se poursuit par un brin 653 longitudinal jusqu'à une poulie 654 fixée par son axe 655 ou droit du rail 611, le brin 656 issu de la poulie 654 étant adjacent à la face interne 657 dudit rail et supporté par les rouleaux d'une chaîne Galle, non représentée, fixée sur ce dernier.

Le barreau 645 est supporté en sa partie médiane par l'organe mobile 661 d'un vérin 662 fixé sur le plancher 626, sur la face inférieure de ce dernier.

La condition montrée sur les figures 18 et 20 est celle pour laquelle la palette parvenant au carrefour 606 par la voie 603 poursuit son mouvement dans la voie 607, prolongeant la voie 603, sous l'action d'entraînement du brin 613, comme expliqué ci-dessus.

Si, par contre, la palette parvenant par la voie 603 foit poursuivre son mouvement dans la voie 609, le vérin 662 reçoit du fluide sous pression et la condition devient celle montrée sur les figures 19 et 21. A la fin de son défilement à l'aplomb du carrefour 606, les plots 663 et 664, qui font saillie par rapport à la face inférieure 665 du patin de droite 666 de la palette 601, viennent buter contre le brin de courroie 648 et celui-ci est alors propre à entraîner la palette par coopération avec la face inférieure 665 du patin, et cela suivant l'axe de la voie 609. Pendant la première partie du mouvement, le guidage de la palette a lieu par coopération de la face verticale 671 du plot postérieur 672 faisant saillie vers le bas par rapport à la face inférieure 631 du patin 632 avec la face verticale 673 que présente un bloc 674 fixé sur le plancher 626.

L'entraînement a lieu jusqu'à ce que la face inférieure 631 du patin 632 vienne coopérer avec le brin 656, le guidage ayant alors lieu par le bord opposé de la palette qui coopère avec une échancrure 675 que présente le rail 612.

Par la disposition selon l'invention, le mouvement de la palette reste purement horizontal, que la palette, au sortir d'une voie aboutissant à un carrefour, poursuive son mouvement dans le prolongement de ladite voie ou, au contraire, le poursuive suivant une voie perpendiculaire.

Le fait de prévoir plusieurs courroies pour l'entraînement des palettes dans un module faisant partie de la machine-transfert permet d'accommoder, dans un même module, des palettes en grand nombre, sans que chaque courroie ait à être soumise à une tension excessive résultant des résistances nées du frottement de la courroie contre les faces inférieures de palettes mobiles.

**Revendications**

1. Installation pour l'assemblage et/ou l'usinage manuel et/ou automatique de pièces portées par des palettes (201) généralement rectangulaires comprenant, pour l'entraînement des palettes, des brins en mouvement de courroies ou analogue (283, 296, 426, 326, 327) coopérant par friction avec au moins une marge des palettes, caractérisée en ce que les brins de courroie ou analogue (283, 296, 426, 326, 327, etc.) sont disposés les uns à la suite des autres et/ou parallèlement et/ou perpendiculairement entre eux de sorte que leurs actions successives ou simultanées d'entraînement à friction sur un côté ou deux côtés parallèles ou perpendiculaires des palettes entraînent chaque palette (201) suivant un trajet plan à voies parallèles et perpendiculaires, le passage de l'entraînement d'une palette (201), d'abord dans une première voie (127) puis dans une voie perpendiculaire (113) par des brins de courroie ou analogue perpendiculaires entre eux (326, 327), se faisant avec intervention de moyens de butée (304) pour limiter la course de la palette dans la première voie, rendant le premier brin inopératoire.

2. Installation selon la revendication 1, caractérisée en ce que la palette (201) étant guidée par ses bords le long de son trajet dans la première voie (127) jusqu'au débouché dans celle-ci de la seconde voie (113), des moyens de guidage supplémentaires (344) sont prévus pour la fin du trajet de la palette dans cette première voie en regard du débouché de la seconde voie, opératoires jusqu'à l'intervention des moyens de butée (304).

3. Installation selon la revendication 2, caractérisée en ce que le guidage est obtenu par des plots rectangulaires (245, 245', 246, 246') que présente la palette (201) en saillie par rapport à sa face inférieure et propres à coopérer avec des blocs de soutien (344, 346) et de guidage fixes.

4. Installation selon la revendication 1, caractérisée en ce que deux brins coopérant simultanément avec une même palette pour son entraînement dans une même direction sont à un même niveau.

5. Installation selon la revendication 4, caractérisée en ce que deux brins (283, 296) propres à coopérer avec une même palette pour l'entraînement de celle-ci dans une même direction sont dans le prolongement l'un de l'autre.

6. Installation selon la revendication 1, caractérisée en ce que deux brins (296, 426) propres à coopérer avec une même palette pour l'entraînement de celle-ci dans une même direction sont parallèles entre eux mais distants transversalement l'un de l'autre pour coopérer, l'un avec une marge de la palette et l'autre avec la marge opposée.

7. Installation selon la revendication 1, caractérisée en ce que deux brins (326, 327) coopérant simultanément avec une même palette pour son entraînement d'abord dans une direction puis dans une direction perpendiculaire sont à des niveaux différents.

8. Installation selon la revendication 1, comprenant un poste automatique à guichet (102), caractérisée en ce que, dans le poste à guichet l'introduction de la palette dans le guichet se fait par le déplacement transversal d'un poussoir (503) qui présente un alvéole (510) coopérant avec le côté d'entraînement de la palette pour son alimentation dans le poste et son évacuation à partir de celui-ci, assurant le soutien de la palette pendant son transfert à l'intérieur de deux guides (513, 514) dudit guichet.

9. Installation selon la revendication 1, caractérisée en ce que la palette (201) comprend un plateau porte-pièce (202) à marges d'entraînement et deux patins allongés (209, 211) faisant saillie vers le bas par rapport au plateau et également à marge d'entraînement.

10. Installation selon la revendication 9, caractérisée en ce que la face inférieure (208) du plateau (202) est garnie le long des bords, par un filet (resp. 253, 254) à coefficient de frottement plus élevé que le corps du plateau.

11. Installation selon la revendication 10, caractérisée en ce que les filets du plateau (253, 254) forment un couple de deux filets parallèles.

12. Installation selon la revendication 9 ou 11, caractérisée en ce que les patins (209, 211) sont dirigés perpendiculairement auxdits filets du plateau.

13. Installation selon la revendication 9, caractérisée en ce que la face inférieure des patins est garnie d'un filet (resp. 256, 257) à coefficient de frottement plus élevé que les reste du patin.

14. Installation selon la revendication 9, caractérisée en ce que les deux patins sont parallèles et portent des moyens de codage.

15. Installation selon la revendication 14, caractérisée en ce que les moyens de codage sont des touches (222, 222') montées à pivotement autour d'un axe commun (218).

16. Installation selon la revendication 1, caractérisée en ce que chaque brin rectiligne de courroie est soutenu par une multiplicité de rouleaux (333) rapprochés du type de ceux d'une chaîne Galle et portés par un rail (302).

17. Installation selon la revendication 1, caractérisée en ce que les brins d'entraînement des palettes dans plusieurs directions perpendiculaires et parallèles font partie d'une ou plusieurs courroies sans fin ou analogue.

18. Installation selon la revendication 17, caractérisée en ce qu'un ou des brins de courroie ou analogue entraînant par friction une palette suivant un trajet plan à plusieurs voies parallèles et perpendiculaires sont mus par un même moteur électrique.

19. Installation selon la revendication 17, caractérisée en ce que des brins de courroie ou analogue sont guidés par des poulies ou analogue aux angles des voies perpendiculaires ou aux extrémités de voies.

20. Installation selon la revendication 19, caractérisée en ce que des gorges de poulies sont à des niveaux différents.

## Claims

1. An installation for manual and/or automatic assembly and/or machining of parts carried on generally rectangular pallets (201), the installation comprising, to drive the pallets, moving lengths of belts or the like co-operating by friction with at least one margin of the pallets, characterized in that the lengths of belt or the like (283, 296, 426, 326, 327, etc). are disposed one after another and/or in parallel and/or perpendicularly to one another, whereby their successive or simultaneous friction drive action on one side or on two parallel or perpendicular sides of the pallets convey each pallet (201) along a plane path including parallel and perpendicular channels, the drive of a pallet (201) which is initially in a first channel (127) and which is subsequently in a perpendicular channel (113) being performed by means of mutually perpendicular lengths of belt or the like (326, 327) and being transferred with the aid of stop means (304) for limiting the travel of the pallet in the first channel, thereby making the first length inoperative.

2. An installation according to claim 1, characterized in that the pallet (201) is guided by its edges along its path in the first channel (127) until it opens out into the second channel (113), and additional guidance means (344) are provided for the end of the pallet's path in the first channel opposite to the exit to the second channel, which additional means are operative until the stop means (304) take effect.

3. An installation according to claim 2, characterized in that the guidance is obtained by rectangular lugs (245, 245', 246, 246') projecting from the lower face of the pallet (201) and suitable for co-operating with fixed support and guidance blocks (344, 346).

4. An installation according to claim 1, characterized in that two lengths of belt or the like co-operating simultaneously with a single pallet to drive it in the same direction are at the same level.

5. An installation according to claim 4, characterized in that two lengths of belt or the like (283, 296) suitable for co-operating with a single pallet to drive it in a single direction are in line with each other.

6. An installation according to claim 1, characterized in that two lengths of belt or the like (296, 426) suitable for co-operating with a single pallet to drive it in a single direction are mutually parallel but transversely distant from each other to cooperate with respective opposite margins of the pallet.

7. An installation according to claim 1, characterized in that two lengths of belt or the like (326, 327) co-operating simultaneously with a single pallet to drive it first in one direction and then in a perpendicular direction are at different levels.

8. An installation according to claim 1, including an automatic station (102) with a hatch, characterized in that a pallet is inserted into the hatch by transversal displacement of a pusher (503) having a slot (510) co-operating with the drive side of a pallet to insert it into the station and to remove therefrom, and supporting the pallet while it is transferred between two guides (513, 514) in the hatch.

9. An installation according to claim 1, characterized in that the pallet (201) comprises a part-carrying tray (202) with drive margins and two elongate shoes (209, 211) projecting downwardly from the tray and likewise having drive margins.

10. An installation according to claim 9, characterized in that the lower face (208) of the tray (202) is fitted along its edges with respective strips (253, 254) having a higher coefficient of friction than the body of the tray.

11. An installation according to claim 10, characterized in that the strips (253, 254) on the tray form a pair of parallel strips.

12. An installation according to claim 9 or 11, characterized in that the shoes (209, 211) are directed perpendicularly to the said strips on the tray.

13. An installation according to claim 9, characterized in that the lower faces of the shoes are fitted with respective strips (256, 257) having a higher coefficient of friction than the rest of the shoe.

14. An installation according to claim 9, characterized in that the two shoes are parallel and carry coding means.

15. An installation according to claim 14, characterized in that the coding means are tabs (222, 222') pivotally mounted about a common axis (218).

16. An installation according to claim 1, characterized in that each rectilinear length of belt is supported by a multiplicity of adjacent rollers (333) of the sprocket chain type mounted on a rail (302).

17. An installation according to claim 1, characterized in that the lengths for driving a pallet in a plurality of perpendicular and parallel directions are parts of one or more endless belts of the like.

18. An installation according to claim 17, characterized in that one or more of the lengths of belt or the like driving a pallet by friction along a plane path including a plurality of parallel and perpendicular channels are driven by a common electric motor.

19. An installation according to claim 17, characterized in that the lengths of belt or the like are guided by pulleys or the like at the angles of the perpendicular channels or at the ends of the channels.

20. An installation according to claim 19, characterized in that the grooves of the pulleys are at different levels.

**Patentansprüche**

1. Anlage für die manuelle und/oder automatische Montage und/oder Bearbeitung von Werkstücken, die von Paletten (201) von allgemeiner, rechteckiger Form getragen werden, für den Antrieb der Paletten, für der der beweglichen Riemenabschnitte oder ähnlichen, die durch Reibung mit mindestens einem Palettenrand arbeiten, dadurch gekennzeichnet, dass die Riemenabschnitte oder ähnliche (283, 296, 426, 326, 327, usw.) hintereinander und/oder parallel und/oder senkrecht zu einander angeordnet sind, so dass ihre aufeinander folgenden oder gleichzeitigen Aktionen zum Reibantrieb auf eine Seite oder zwei parallelen oder senkrechten Seiten der Paletten jede Palette (201) entsprechend einem ebenen Weg mit parallelen und senkrechten Bahnen antreibt, wobei der Übergang zwischen dem Antrieb einer Palette (201) erst in eine erste Bahn (127) und dann in eine senkrechte Bahn (113) mittels Riemenabschnitten oder ähnlichen (326), die zueinander senkrecht stehen, unter Mitwirkung von Anschlagsmitteln (304) erfolgt, um den Lauf der Palette in der ersten Bahn zu begrenzen und somit den ersten Abschnitt unwirksam macht.

2. Anlage nach Anspruch 1, dadurch gekennzeichnet, dass die Palette (201) durch ihre Ränder entlang ihres Weges in der ersten Bahn (127) geführt wird, bis diese in die zweite Bahn (113) gelangt und dass zusätzliche Führungsmittel (344) für das Ende des Palettenwegs in dieser ersten Bahn gegenüber der Mündung der zweiten Bahn vorgesehen sind, die wirksam sind, bis die Anschlagsmittel (304) eingreifen.

3. Anlage nach Anspruch 2, dadurch gekennzeichnet, dass die Führung durch rechteckige Klötze (245, 245', 246, 246') gewährleistet ist, die die Palette (201) besitzt, die aus ihrer Unterseite herausragen und die mit unbeweglichen Stütz- (344, 346) und Führungsblöcken arbeiten können.

4. Anlage nach Anspruch 1, dadurch gekennzeichnet, dass zwei Abschnitte, die gleichzeitig mit der gleichen Palette zu deren Antrieb in der gleichen Richtung arbeiten, auf der gleichen Höhe sind.

5. Anlage nach Anspruch 4, dadurch gekennzeichnet, dass zwei Abschnitte (283, 296), die mit einer gleichen Palette zwecks deren Antrieb in einer gleichen Richtung arbeiten können, in der gleichen Achse stehen.

6. Anlage nach Anspruch 1, dadurch gekennzeichnet, dass zwei Abschnitte (296, 426), die mit einer gleichen Palette zwecks deren Antrieb in der gleichen Richtung arbeiten können, parallel zueinander stehen, allerdings mit Abstand zueinander, so dass einer mit einem Palettenrand und der andere mit dem gegenüberliegenden Rand arbeitet.

7. Anlage nach Anspruch 1, dadurch gekennzeichnet, dass zwei Abschnitte (326, 327) die gleichzeitig mit einer gleichen Palette zwecks deren Antrieb erst in einer Richtung und dann in einer senkrechten Richtung arbeiten, auf verschiedenen Höhen liegen.

8. Anlage nach Anspruch 1 bestehend aus einem automatischen Arbeitsstand (102) mit Öffnung, dadurch gekennzeichnet, dass in dem Arbeitsstand mit Öffnung die Palette in die Öffnung eingeführt wird, dadurch dass ein Schieber (503) quer verschoben wird, der eine Zelle (510) aufweist, die mit der Antriebsseite der Palette zu deren Zufuhr und Ausfuhr aus dem Arbeitsstand zusammenarbeitet, wobei sie die Stützung der Palette während deren Übergang innerhalb zweier Führungsmittel (513, 514) der genannten Öffnung gewährleistet.

9. Anlage nach Anspruch 1, dadurch gekennzeichnet, dass die Palette (201) eine Werkstückhalteplatte (202) mit Antriebsrändern und zwei länglichen Schlitten (209, 211) besitzt, die nach unten aus der Palette herausragen und ebenfalls einen Antriebsrand aufweisen.

10. Anlage nach Anspruch 9, dadurch gekennzeichnet, dass die Unterseite (208) der Platte (202) an den Rändern mit einer Leiste (253, 254) versehen ist, deren Reibungskoeffizient höher als der des Plattenkörpers ist.

11. Anlage nach Anspruch 10, dadurch gekennzeichnet, dass die Leiste (253, 254) der Platte ein Paar paralleler Leisten bilden.

12. Anlage nach Anspruch 9 oder 11, dadurch gekennzeichnet, dass die Schlitten (209, 211) senkrecht zu den genannten Leisten der Platte orientiert sind.

13. Anlage nach Anspruch 9, dadurch gekennzeichnet, dass die Unterseite der Schlitten mit je einer Leiste (256, 257) ausgerüstet ist, deren Reibungskoeffizient höher als der des übrigen Schlittens ist.

14. Anlage nach Anspruch 9, dadurch gekennzeichnet, dass die zwei Schlitten parallel sind und Codemittel tragen.

15. Anlage nach Anspruch 14, dadurch gekennzeichnet, dass die Codemittel Tasten (222, 222') sind, die drehbar um eine gemeinsame Achse (218) montiert sind.

16. Anlage nach Anspruch 1, dadurch gekennzeichnet, dass jeder gerade Riemenabschnitt durch eine Vielzahl von Nachbarrollen (333) gestützt wird, die denen einer Laschenkette ähnlich sind und durch eine Schiene (302) getragen werden.

17. Anlage nach Anspruch 1, dadurch gekennzeichnet, dass die Antriebsabschnitte der Paletten in mehreren senkrechten und parallelen Richtungen zu einem oder mehreren endlosen oder ähnlichen Riemen gehören.

18. Anlage nach Anspruch 17, dadurch gekennzeichnet, dass einer oder mehrere Riemenabschnitte oder ähnliche, die durch Reibung eine Palette entlang eines Weges mit mehreren parallelen und senkrechten Bahnen antreiben, durch den selben Elektromotor angetrieben werden.

19. Anlage nach Anspruch 17, dadurch gekennzeichnet, dass Riemenabschnitte oder ähnliche durch Rollen oder ähnliche in den Winkeln der senkrechten Bahnen oder an den Bahnenden geführt werden.

20. Anlage nach Anspruch 19, dadurch gekennzeichnet, dass die Rollenrillen auf verschiedenen Höhen liegen.

FIG. 1

FIG. 2

FIG. 3

FIG. 5

FIG. 6

FIG. 4

FIG. 9

FIG. 10

FIG. 11

FIG. 8

0 050 080

0 050 080

FIG. 13

FIG. 14

FIG. 12

19

FIG.7

FIG.16

FIG.15

FİG. 17

FİG. 18

FİG. 19

FİG. 20

FİG. 21